# EUROPÄISCHE PATENTSCHRIFT

(11) **EP 1 247 133 B1**
(45) Veröffentlichungstag und Bekanntmachung des Hinweises auf die Patenterteilung: **28.04.2004**
(21) Anmeldenummer: 00981061.5
(22) Anmeldetag: 23.11.2000
(51) Int. Cl.: G02B 25/00, G02C 7/08, G02B 21/20, G02B 27/01

(54) **SEHHILFE IN FORM EINER LUPENBRILLE MIT AUTOFOKUSSIEREINRICHTUNG**
VISUAL AID IN THE FORM OF TELESCOPIC SPECTACLES WITH AN AUTOMATIC FOCUSSING DEVICE
DISPOSITIF OPTIQUE SOUS FORME DE LUNETTE-LOUPE DOTE D'UN DISPOSITIF AUTOFOCUS

(30) Priorität: 24.11.1999 AT 199499; 30.11.1999 AT 201699
(43) Veröffentlichungstag der Anmeldung: 09.10.2002
(73) Patentinhaber: Life Optics Handel und Vertrieb GmbH, 1190 Wien (AT)
(72) Erfinder: OFNER, Gerald, Anton, A-1190 Wien (AT)
(74) Vertreter: Beer, Manfred, Dipl.-Ing.
(86) Internationale Anmeldenummer: PCT/AT2000/000317
(87) Internationale Veröffentlichungsnummer: WO 2001/038919

(56) Entgegenhaltungen:
- WO-A-98/19204
- US-A- 2 406 526
- US-A- 4 673 260
- US-A- 4 725 863
- US-A- 4 779 965
- US-A- 5 374 820
- US-A- 5 486 948
- US-A- 5 971 540
- PATENT ABSTRACTS OF JAPAN vol. 1995, no. 09, 31. Oktober 1995 (1995-10-31) & JP 07 152096 A (CANON INC), 16. Juni 1995 (1995-06-16)

## Beschreibung

Die Erfindung betrifft eine Sehhilfe mit den Merkmalen des einleitenden Teils von Anspruch 1 mit einer Autofokussiereinrichtung, mit einer Einrichtung zum Ändern der Brennweite und mit einer Einrichtung zum Anpassen der Parallaxe zwischen den Tuben der Sehhilfe an die jeweils eingestellte Brennweite.

Eine derartige Sehhilfe (Lupenbrille) mit einer Autofokussiereinrichtung, mit einer Einrichtung zum Ändern der Brennweite und mit einer Einrichtung zum Anpassen der Parallaxe zwischen den Tuben der Sehhilfe an die jeweils eingestellte Brennweite, ist aus der WO 96/09566 A (oder den im wesentlichen inhaltsgleichen US 5 971 540 A) bekannt. Die bekannte Sehhilfe ist für den Einsatz als Lupenbrille bestimmt.

Die bekannte Lupenbrille weist eine automatische und/oder eine manuelle Fokussiereinrichtung, eine Vorrichtung zum manuellen Verändern des Vergrößerungsfaktors sowie eine Vorrichtung für einen, der jeweiligen Brennweite entsprechenden, automatischen, mechanischen Parallaxeausgleich auf. Ist, beispielsweise während eines gefäßchirurgischen Eingriffes, aufgrund der Lage der verschiedenen Operationsstellen, eine Änderung des Arbeitsabstandes notwendig, wird die Brennweite und der Parallaxwinkel automatisch oder manuell an den neuen Arbeitsabstand angepaßt. Dadurch ist eine dem jeweils durchgeführten Eingriff entsprechende, optimale Einstellung der Sehhilfe gewährleistet. Überdies kann der Benützer der Sehhilfe die jeweils vorteilhafteste, ergonomische Position einnehmen, so daß ein ermüdungsfreies Operieren möglich ist. Darüber hinaus bietet die bekannte Sehhilfe die Möglichkeit, den Vergrößerungsfaktor in jedem gewählten Arbeitsabstand dem jeweiligen Erfordernis anzupassen. Die bekannte mittels einer Kopfhalterung ("Headset") getragene Sehhilfe ermöglicht es dem Benützer den Arbeitsabstand und den verwendeten Vergrößerungsfaktor weitgehend frei zu wählen. Als Steuergerät dient ein Fußschalter. Um bei sich änderndem Arbeitsabstand und Scharfstellung das 3-D-Bild nicht zu verlieren, verwendet die bekannte Sehhilfe eine Autofokuseinrichtung, die durch mechanisches Verändern des Winkels der Tuben der Sehhilfe zueinander den Parallaxwinkel der jeweiligen Brennweite anpaßt. Diese Art der Anpassung der Parallaxe an die jeweils eingestellte Brennweite birgt mehrere Nachteile:
(1) Die Tubenverstellung wird von Motoren über Getriebe mechanisch ausgeführt, was ein relativ großes Gewicht und damit einen geringen Tragekomfort des Anwenders bedeutet.
(2) Da die Tuben der Sehhilfe zueinander nach der Längsachse beweglich ausgeführt werden müssen, leidet die Widerstandsfähigkeit des Systems gegen mechanische Beanspruchung.
(3) Bei jedem Ändern des Arbeitsabstandes ändert die Parallax-Ausgleichseinrichtung die Stellung der Tuben zueinander und damit auch die winkel der Okularebenen zu den Augen des Benutzers. Dies kann zu störenden Reflexionen und zu einer Verkleinerung der Eintrittspupille und damit des Gesichtsfeldes führen.
(4) In der Praxis ist es kaum möglich, mit dieser Art des Parallaxausgleiches benutzerunabhängige Systeme herzustellen, das heißt, jedes System ist auf einen bestimmten Benutzer und dessen distalen Pupillenabstand zugeschnitten. Dies macht höhere Investitionen notwendig, wenn z.B. Krankenhäuser sicherstellen wollen, daß alle Operationen mit Autofokus-Lupenbrillen durchgeführt werden können.
(5) Werden an den Okularen über diese hinausragende Korrekturgläser angebracht, können diese bei einer Änderung der Stellung der Tuben unter Umständen das Gesicht des Anwenders berühren und diesen dadurch ablenken.

Weiters wäre es für Anwender, z.B. in der Chirurgie, sehr oft von großem Nutzen, während der Verwendung einer solchen Sehhilfe zusätzliche Information wie etwa die Vitaldaten des Patienten aus dem Monitoring-System, Meßskalen oder auch Röntgen-, Computertomographie- oder andere Daten betrachten zu können. Die derzeit bekannten Lupenbrillen bieten diese Möglichkeit nicht.

Eine ähnliche Lupenbrille ist aus der AT E 98782 B bekannt.

Aus der US 5 078 469 A ist eine Lupenbrille bekannt, mit der eine videokamera und eine Anzeigeeinheit verbunden sind, um Aufnahmen des Operationsfeldes zu übertragen.

Die WO 95/25979 A offenbart ein Operationsmikroskop, das Einrichtungen zum Erzeugen und Darstellen dreidimensionaler Bilddaten des Operationsfeldes sowie zum Einspiegeln zusätzlicher Informationen, wie z.B. Patientendaten aufweist.

Die US 4 621 283 A beschreibt ein am Kopf eines Chirurgen zu tragendes Gerät mit einer Lupenbrille und einer Aufnahmekamera sowie einer Lichtquelle, wobei die Aufnahmekamera und die Lichtquelle durch einen verschwenkbaren Spiegel, ungeachtet des Umstandes, daß sie oben am Kopf im Abstand getragen werden, eine den Blickrichtungen durch die Lupenbrille vor den Augen des Chirurgen im wesentlichen parallele Blickrichtung haben, so daß das vom Chirurgen gesehene Bildfeld im wesentlichen aus demselben Blickwinkel über die Aufnahmeeinrichtung auf einen Bildschirm übertragen werden kann.

Die US 5 486 948 A zeigt eine Vorrichtung zum Bilden eines steroskopischen Bildes mit zwei bildaufnehmenden Systemen. Diese bildaufnehmenden Systeme können Fernsehkameras sein. Im Strahlengang jeder der beiden Fernsehkameras sind zwei keilförmige Prismen angeordnet, die in jeweils entgegengesetzte Richtungen drehbar sind, um den Lichtstrahl bei sich änderndem Abstand vom Objekt in Synchronisation mit dem Fokussieren der Fernsehkameras abzulenken. Dadurch soll die Vorrichtung auf das Objekt scharf gestellt werden können, ohne die Fernsehkameras selbst drehen zu müssen.

Die US 4 779 965 A schlägt vor, einem Feldstecher exzentrisch positive Achomaten den Objektivlinsen des Feldstechers zuzuordnen, um durch Verdrehen dieser Achomaten zu erreichen, daß die Verwendung des Feldstechers als Mikroskop die von den beiden optischen Systemen des Feldstechers erzeugten Bilder gleichzeitig zu sehen und ein stereoskopisches Bild zu erhalten.

JP 07152096 A schlägt ein Bildaufnahmesystem mit mehreren Linsen vor, wobei den Linsensystemen vor deren Objektivlinsen jeweils ein Spiegelpaar drehbar angeordnet ist, so daß der Parallaxwinkel ohne Bewegen des Linsenpaares durch Verschwenken und Verschieben eines Spiegels jedes Spiegelpaares verändert werden kann.

Der Erfindung liegt die Aufgabe zu Grunde, eine Sehhilfe zur Verfügung zu stellen, die am Kopf getragen wird und die es dem Benutzer ermöglicht, den Arbeitsabstand zu wechseln und unterschiedliche, der jeweiligen Tätigkeit angepaßte Vergrößerungstaktoren zu verwenden. Weiters soll das 3-D-Bild erhalten bleiben, ohne daß die Stellung der beiden Tuben der Sehhilfe zueinander verändert werden muß, wie dies bei der aus der WO 96/09566 bekannten Sehhilfe der Fall ist. Überdies soll es dem Benutzer möglich sein, Zusatzinformationen in Text- oder Bildform, die von externen Datenquellen stammen, z betrachten und etwaige Fehlsichtigkeiten durch entsprechende Einstellungen an den Okularen der Sehhilfe zu beheben.

Gelöst wird diese Aufgabe gemäß der Erfindung mit einer Sehhilfe, welche dadurch ausgezeichnet ist, daß die in den Strahlengängen der Sehhilfe vorgesehenen, optischen Elemente zum Ändern des Winkels zwischen den aus den Linsensystemen zum Objektiv hin verlaufenden Strahlengängen längs gekrümmter Bahnen quer zum Strahlengang in den Linsensystemen verschiebbar sind oder kippbar angeordnet sind. Bei der Erfindung ergibt sich der Vorteil, daß ohne Verstellen von Tuben zueinander bloß mit Hilfe der im Strahlengang der Sehhilfe vorgesehenen, verstellbaren optischen Elemente der Winkel zwischen den aus den Tuben zum Objekt hin verlaufenden Strahlengängen veränderbar ist.

Bevorzugte und vorteilhafte Ausgestaltungen der erfindungsgemäßen Sehhilfe sind Gegenstand der abhängigen Ansprüche.

Die erfindungsgemäße Sehhilfe stellt eine vollkommen neue Anwendung bzw. (Produkt)klasse dar. sie unterscheidet sich einerseits von Lupenbrillen bzw. Operationsmikroskopen hauptsächlich dadurch, daß durch die Merkmale Autofokus, optischer Parallaxeausgleich und variabler Zoom eine bisher nie gekannte, völlige freie Beweglichkeit während der Anwendung möglich ist. Die erfindungsgemäße Sehhilfe unterscheidet sich von Operationsmikroskopen vornehmlich dadurch, daß sie mittels einer Kopfhalterung auf dem Kopf des Benutzers getragen werden kann.

Die erfindungsgemäße Sehhilfe ist nicht nur bei Operationen am menschlichen oder tierischen Körper, sondern überall dort einsetzbar, wo der Benützer ein Arbeitsfeld vergrößert sehen soll.

Die Erfindung stellt eine leichte, stabile und komfortable stereoskopische Sehhilfe mit variablem Vergrößerungsfaktor, Autofokus und automatischem Parallaxeausgleich und mit Kompensationsmöglichkeit von Fehlsichtigkeit zur Verfügung, wobei der Winkel der Tuben der Sehhilfe zueinander nicht verändert werden muß. Dieses Merkmal erlaubt auch eine Konstruktionsform der Sehhilfe dergestalt, daß die beiden Strahlengänge in einem einzigen, vorzugsweise ovalen, Tubus untergebracht werden können. Weiters können dem Anwender visuelle Zusatzinformationen angeboten werden.

In bevorzugten Ausführungsformen bietet die erfindungsgemäße Sehhilfe wenigstens eine der nachstehend genannten Möglichkeiten.

Beim Benützen der Sehhilfe gemäß der Erfindung bei einer Operation kann der Arbeitsabstand des die Sehhilfe der Erfindung benützenden Chirurgen verändert werden - etwa um einem Assistenten einen besseren Einblick in das Operationsgebiet zu ermöglichen - ohne daß sich dabei auch der Vergrößerungsfaktor ändert.

Weiters können Objekte, wie zum Beispiel ein Tumor, einer genauen, größenmäßigen Bestimmung unterzogen werden, ohne eine Adaption des Vergrößerungsfaktors durchführen zu müssen.

Während einer Operation kommt es häufig zu kurzfristigem Durchkreuzen des Strahlenganges zwischen Objektiv und Operationsfeld, was bei der bekannten Lupenbrille zu einer nicht gewünschten Adaption der Brennweite auf den durchkreuzenden Gegenstand mit einer darauffolgenden Readaption auf das ursprüngliche Gesichtsfeld durch die Autofokussiereinrichtung führt. Dies kann bei der Erfindung dadurch vermieden werden, daß die automatische Änderung der Brennweite mit einem Verzögerungsschalter versehen ist und daher eine Änderung des Arbeitsabstandes erst nach einer einstellbaren Zeit und/oder mit wählbarer Geschwindigkeit zu einer auf den neuen Arbeitsabstand optimierten Brennweite führt. Die Reaktionszeit des Autofokusteil kann also auf eine bestimmte Situation oder einen persönlichen Arbeitsstil abgestimmt werden.

Besonders in der chirurgischen Ausbildung erlaubt es eine Ausführungsform der Erfindung den, eine Operation mitbeobachtenden Studenten den Eingriff in genau jener Perspektive zu verfolgen, die sich auch dem Chirurgen bietet.

Speziell bei Operationen in Körperhöhlen stellt sich oft das Problem einer optimalen Ausleuchtung: die Deckenleuchte ist oft kaum in die passende Lage zu bringen, eine in einer Kopfhalterung angebrachte Lichtquelle besitzt notwendigerweise einen Parallaxwinkel zum optischen Strahlengang zwischen Objektiv und Sehfeld, was besonders in Körperhöhlen mit kleinem Durchmesser zu unerwünschter Schlagschattenbildung führt. Für Assistenzärzte kann es auch vorteilhaft sein, das genaue Sehfeld des Operateurs zu erkennen, um ihre Aufmerksamkeit darauf zu richten.

Es sind auch Anwendungen der Erfindung denkbar, bei denen die Autofluoreszenzeigenschaften von Geweben, ausgenutzt werden. Dazu kann mit oder ohne Einsatz von verschiedenen Filter- und Frequenzumwandlungssystemen, eine mit der Sehhilfe gemäß der Erfindung kombinierte UV-/IR- oder Laser-Lichtquelle verwendet werden.

Auch gibt es Anwendungssituationen, in denen ein verstärkter 3-D Eindruck vorteilhaft wäre. Dieses erreicht die Erfindung in einer Ausführungsform durch eine Vorrichtung zur Vergrößerung des Abstandes der Objektive voneinander.

Nicht selten blickt der Benützer der Sehhilfe gemäß der Erfindung, zum Beispiel um sich während einer Operation überblicksweise zu orientieren, neben der vor den Augen angebrachten Lupenbrille vorbei. Bei bestehender Fehlsichtigkeit ist das nur praktikabel, wenn an den Okularen der Lupenbrille Korrekturgläser angebracht sind. Diese Korrekturgläser vollziehen, um eine Verminderung der optischen Qualität bei Änderung des Parallaxwinkels zu vermeiden, in einer Ausführungsform der Erfindung die Parallaxadaption bei Brennweitenänderung der Lupenbrille mit.

Fehlsichtigkeit, die nicht durch einen an den Okularen angebrachten Dioptrienausgleich korrigiert werden kann, ist bei Einsatz der aus der WO 96/09566 bekannten Sehhilfe problematisch und wird in einer Ausführungsform der vorliegenden Erfindung durch an den Okularen befestigte Korrekturgläser behoben.

Auch sind die erfindungsgemäß bevorzugt vorgesehenen, leicht zu reinigenden, absorbierenden, reflektierenden oder filternden Schutzgläser sowie Einspiegelungen in oder neben das unmittelbare Gesichtsfeld von Informationen, wie beispielsweise von Operationsparametern, bei mehreren denkbaren Einsatzmöglichkeiten vorteilhaft.

Zur genauen größenmäßigen Bestimmung von Objekten kann bei der Erfindung eine Meßskala, die als Flüssigkristall-Anzeige, LED-, Vakuumfluoreszenz- oder Gasentladungs-Anzeige oder auch in anderer Form ausgeführt sein, in einer Zwischenbildebene eingeführt sein.

Weiters kann in einer Ausführungsform durch Ausspiegelung eines Strahlengangteiles auf ein CAD-Kameramodul ein beispielsweise in der chirurgischen Ausbildung wünschenswerte Möglichkeit geschaffen werden, den Operationsverlauf über einen Monitor zu beobachten.

Eine bevorzugt vorgesehene, in das optische System integrierte oder als aperturvariables Faserbündel ausgeführte Lichtquelle verbessert die Beleuchtungseigenschaften bei Verwendung dieser Ausführungsform der Sehhilfe der Erfindung im Vergleich zu bekannten Sehhilfen wesentlich. Das Einkoppeln von Licht erfolgt bevorzugt durch einen Strahlenteiler oder in eine Prismenfläche des Prismenumkehrsystems. Die Lichtquelle kann zur Beobachtung UV-/IR- oder Laser-Licht aussenden. Das vom Objekt reflektierte Licht kann durch einen Filter in den Okularen absorbiert oder reflektiert werden. Der Einsatz von infrarotem Licht, ultraviolettem Licht oder Laser-Licht kann von großem diagnostischem Wert sein.

Der Parallaxeausgleich bei Brennweitenänderungen ohne Änderung der Tuben- bzw. Okularabstände kann bei der Erfindung erreicht werden, indem beispielsweise ein im Mittelteil der Sehhilfe angebrachter Elektromotor über entsprechende Seilzüge oder Getriebe das jeweilige Objektiv oder einen Teil davon (Frontglied) kurvengesteuert, gleichzeitig seitlich und/oder axial bewegt und gegebenenfalls kippt. Mit Hilfe der axialen Verschiebung kann die Fokussierung (Brennweitenänderung) auf unterschiedliche Entfernungen erfolgen. In der Grundeinstellung der Sehhilfe (die optische Achse des verschiebbaren Objektivs bzw. Objektivteils liegt in der optischen Achse des Variofortsatzes) sind Entfernungseinstellung und Konvergenzwinkel bevorzugt auf einen mittleren Arbeitsabstand eingestellt, so daß die optischen Achsen der Okulare durch die optischen Mittelpunkte der Augen verlaufen. Beim Ändern des Arbeitsabstandes können die Objektive bzw. bei Innenfokussierung die entsprechenden Objektivteile soweit axial verschoben werden, daß die objektseitigen Systembrennpunkte in der Objektebene liegen. Gleichzeitig kann bei der Erfindung eine über Kurven gesteuerte Seitenbewegung der Art, daß die Brennpunkte der beiden Objektive exakt entlang der Symmetrieebene der Sehhilfe geführt werden, erfolgen. Zum Parallaxeausgleich ist dann weder eine Winkeländerung noch eine Abstandsänderung bezüglich der optischen Achsen der Okulare erforderlich.

Weiters kann gleichzeitig durch Kippen der Objektive oder von Teilen derselben, eine Korrektur der durch ihre seitliche Versetzung auftretenden Bildfehler (z. B. Astigmatismus, Kippung der Bildebene) bewirkt werden. Die vorgenannten Bewegungen der Objektive bzw. Objektivteile können auch durch elektrische oder pneumatisch betätigte Linearantriebe der Aktuatoren bewirkt werden.

Die Zusammenhänge zwischen
a) dem Scharfstellen der Linsensysteme durch Ändern der Brennweite und
b) dem Ändern des Vergrößerungsfaktors der Linsensysteme können wie folgt erläutert werden:

Um bei einem vorgegebenen Abstand zwischen einem Linsensystem und einem Gegenstand/Objektfeld ein scharfes Bild zu erhalten, muss die Brennweite des Linsensystems entsprechend dem Abstand zwischen Gegenstand/Objektfeld, z.B. mit einer Autofokussiereinrichtung, geändert werden. Dieses "Scharfstellen" ergibt ein scharfgestelltes Bild, dessen Größe ausschließlich vom Abstand zwischen Linsensystem und Gegenstand/Objektfeld abhängt. Die Größe des scharfgestellten Bildes des Gegenstandes/Objektfeldes kann nur geändert werden, indem der Abstand zwischen dem Gegenstand/Objektfeld und dem Linsensystem geändert wird (größerer Abstand: kleineres Bild - kleinerer Abstand: größeres Bild). Das Ändern der Brennweite eines Linsensystems mit einer Zoom-Einrichtung hingegen ergibt eine Vergrößerung oder eine Verkleinerung des Bildes des Gegenstandes/Objektfeldes, ohne daß der Abstand zwischen Linsensystem und Gegenstand/Objektfeld geändert wird, also nur durch Ändern der Brennweite mit Hilfe der Zoom-Einrichtung. Daher implizieren sowohl das "Scharfstellen" eines Linsensystems mit einer Autofokussiereinrichtung als auch ein Verstellen einer Zoom-Einrichtung ein Verändern der Brennweite. Dessen ungeachtet sind eine Autofokussiereinrichtung und eine Zoom-Einrichtung nicht ein- und dasselbe.

Dieses Prinzip läßt sich an Objektiven von Kameras feststellen: eine Autofokuskamera ohne Zoom-Funktion kann einen bestimmten Baum scharf fokussiert größer oder kleiner darstellen, allerdings nur, wenn sich die Kamera einmal näher, dann wieder weiter entfernt vom Baum befindet. In beiden Fällen nimmt sie die Bilder mit unterschiedlicher Brennweite auf. Eine Kamera mit Zoom-Objektiv hingegen kann den Baum von einem Standort aus einmal größer, dann wieder kleiner aufnehmen - auch sie tut dies mit unterschiedlichen Brennweiten, aber sie besitzt auch noch eine Zoom-Einrichtung. Da eine Zoom-Einrichtung eine zusätzliche Linsengruppe mit Stellmechanik im Linsensystem erfordert, erklärt sich der wesentlich höhere Preis, die unterschiedliche (geringere) Lichtstärke und die meist größeren Abmessungen solcher Linsensysteme.

Weitere Einzelheiten, Merkmale und Vorteile der Erfindung ergeben sich aus der nachstehenden Beschreibung von bevorzugten Ausführungsbeispielen einer Sehhilfe (Lupenbrille) der Erfindung an Hand der schematischen Zeichnungen. Es zeigt:
Fig. 1 eine Sehhilfe;
Fig. 2 eine Sehhilfe mit einer Beleuchtungseinrichtung;
Fig. 3 eine Ausführungsform, bei der der Objektivabstand veränderbar ist;
Fig. 4 eine Sehhilfe mit ihr zugeordneter Laserlichtquelle; und
Fig. 5, 6 eine Kopfhalterung für die Sehhilfe,
Fig. 7, 7a und 7b eine Ausführungsform mit einer Vorrichtung vor dem Sensor für die Autofokuseinrichtung,
Fig. 8 eine Ausführungsform bei der beide Linsensysteme in einem gemeinsamen Tubus untergebracht sind,
Fig. 9 in schematischer Darstellung eine Ausführungsform der Sehhilfe mit einer Einrichtung zum Verhindern des Eintrittes von Fremd-(Infrarot-)Licht in den Empfangsteil der Infrarot-Autofokuseinrichtung,
Fig. 10 in einer Darstellung ähnlich der von Fig. 9 eine andere Ausführungsform der Einrichtung zum Verhindern des Eintrittes von Fremd- (Infrarot-)Licht in den Empfangsteil der Infrarot-Autofokuseinrichtung, und
Fig. 11 schematisch in Form einer prinzipiellen Skizze der Anordnung eines transparenten Displays im Strahlengang der Sehhilfe.

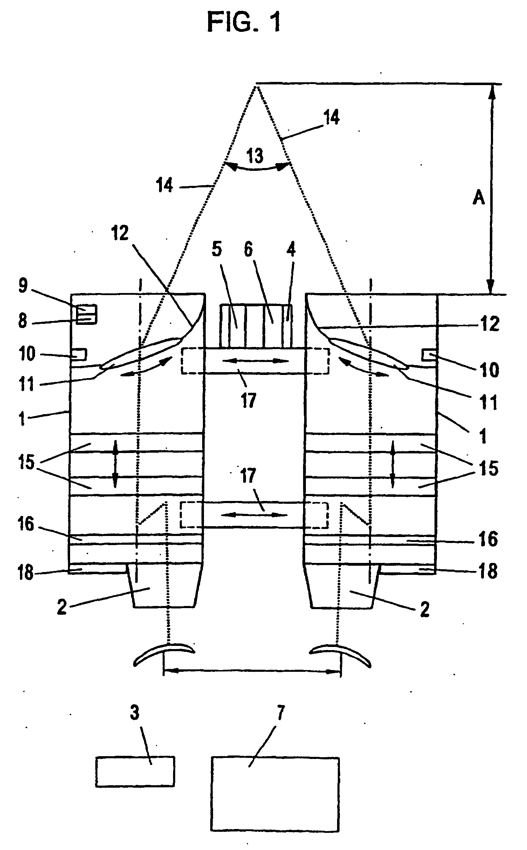

Fig. 1 zeigt eine Sehhilfe ("Lupenbrille"), bestehend aus zwei Tuben 1, Okularteilen 2, einer im vorliegenden Ausführungsbeispiel mittig angebrachten Autofokuseinrichtung 4 mit einer Infrarotdiode 5 und einer Empfangseinheit 6. Die Tuben 1 können miteinander fix, oder wie in Fig. 1 gezeigt, durch längenverstellbare Stege 17 verbunden sein. Ein externer Schalter 3 und eine externe Elektronikeinheit 7 können mit der Sehhilfe per Kabel, oder, wie beim vorliegenden Ausführungsbeispiel, kabellos. z.B. durch Funksender 8 und Funkempfänger 9 oder anders, verbunden sein.

Fig. 1 zeigt weiters zwei im vorliegenden Ausführungsbeispiel in den Tuben 1 untergebrachte, gebogene Platinen als Führungen 12, auf denen durch Stellmotoren 10 optische Elemente 11 so hin und her bewegt werden können, daß die Brechungseigenschaft ihrer jeweiligen Stellung den bei jedem gewählten Arbeitsabstand A notwendigen Winkel 13 zwischen den aus den Tuben 1 austretenden Strahlengängen 14 ergibt. Die optischen Elemente 11 können - bei entsprechender Form - in den Tuben 1 untergebracht oder diesen vorgelagert sein. Die optischen Elemente 11 können auch auf geraden oder gebogenen Platinen verschiebbar sein. Die optischen Elemente 11 können auch nur dreh- oder kippbar angeordnet sein. Die Meßgrundlage für die Stellung der optischen Elemente 11 liefert die Autofokuseinrichtung 4. Die Berechnung der jeweils für den Parallaxeausgleich erforderlichen Stellung der optischen Elemente 11 wird von der Elektronikeinheit 7 erstellt. Die Elektronikeinheit 7 ermittelt auch die für jeden Arbeitsabstand A optimale Stellung des Linsensystems der Fokussiereinheit 14. Diese Stellung wird ebenfalls durch die Stellmotore 10 herbeigeführt.

Weiters zeigt Fig. 1 ein Linsensystem 15, mit Hilfe dessen nach Aktivierung durch den externen Schalter 3 oder über Sprachsteuerung der Vergrößerungsfaktor ("Zoom") der Sehhilfe stufenlos geändert werden kann.

Mittels des externen Schalters 3, oder über die Sprachsteuerung sind auch alle anderen Funktionen der Sehhilfe aktivierbar, deaktivierbar oder veränderbar.

In eine innerhalb der beiden Tuben 1 befindliche, optische Ebene 16 können bei Bedarf zusätzliche Informationen, wie z.B. die Vitaldaten eines Patienten, Computertomografie- oder Röntgendaten oder -Bilder, Meßskalen oder ähnliches eingeblendet werden. Alternativ oder zusätzlich dazu können auch neben einem Okular 2 oder neben beiden Okularen 2 Displays 18 angebracht sein, über die solche Zusatzinformationen dargestellt werden können. Das Einblenden von Information kann stereoskopisch, d.h, mit bezüglich Parallaxe und/oder Augenabstand korrigierten Einzelbildern erfolgen und als Ganz- oder Teilbild festgehalten werden ("freeze-frame").

Die Darstellung der in Bildform eingebrachten Zusatzinformation kann lagegetreu in Relation zu einem betrachteten Objekt erfolgen. Dies kann durch den Einsatz optischer, elektromagnetischer oder anderer Positionierungssysteme gemeinsam mit inertialen Sensoren erfolgen. Ein derartiges System kann auch dazu verwendet werden, die Lage von Objekten, z.B. von chirurgischen Instrumenten relativ zu einem Patienten zu bestimmen, und über eine optische Ebene im Strahlengang der Sehhilfe oder über extern angebrachte Displays darzustellen.

Derartige inertiale Sensoren, Linear- oder Winkelencoder oder auch Ultraschall-, Infrarot- oder andere Systeme können auch verwendet werden, um aktuelle Parameter der Sehhilfe, wie z.B. Vergrößerungsbereich, Entfernung zu einem betrachteten Objekt usw. zu erfassen und zur Modifikation von computergenerierten oder optischen Zusatzinformationen herangezogen und/oder sichtbar gemacht werden.

Die erfindungsgemäße Sehhilfe kann weiters mit einer Vorrichtung zum Ausleuchten des Arbeitsbereiches ausgerüstet sein. Dabei kann das hiefür benötigte Licht mittels Faseroptik von einer externen Lichtquelle über die Kopfhalterung nach vorne in die Nähe der Objektivebene der Sehhilfe geführt werden. Am Ende des Lichtleiters kann ein Linsensystem angebracht sein, welches das austretende Licht dem gewählten Arbeitsabstand und Vergrößerungsfaktor so bündelt, daß das Arbeitsfeld in Größe und Intensität optimal ausgeleuchtet wird. Die dazu notwendigen Meßdaten können von internen oder externen Sensoren bezogen werden. Alternativ oder zusätzlich dazu kann Licht mittels einer Faseroptik auch in das optische System eines Tubus 1 oder beider Tuben 1 so eingekoppelt werden, daß es innerhalb des optischen Systems koaxial zum optischen Strahlengang 14 zum Objekt geleitet wird. Dadurch wird ein Parallaxwinkel zwischen optischem Strahlengang 14 und der Beleuchtung des Arbeitsbereiches vermieden.

Die oben beschriebene Anpassung von Lichtintensität und Größe der ausgeleuchteten Fläche zur Anpassung an die jeweils gewählte Vergrößerung und an den jeweiligen Arbeitsabstand kann innerhalb des optischen Systems der Sehhilfe erfolgen.

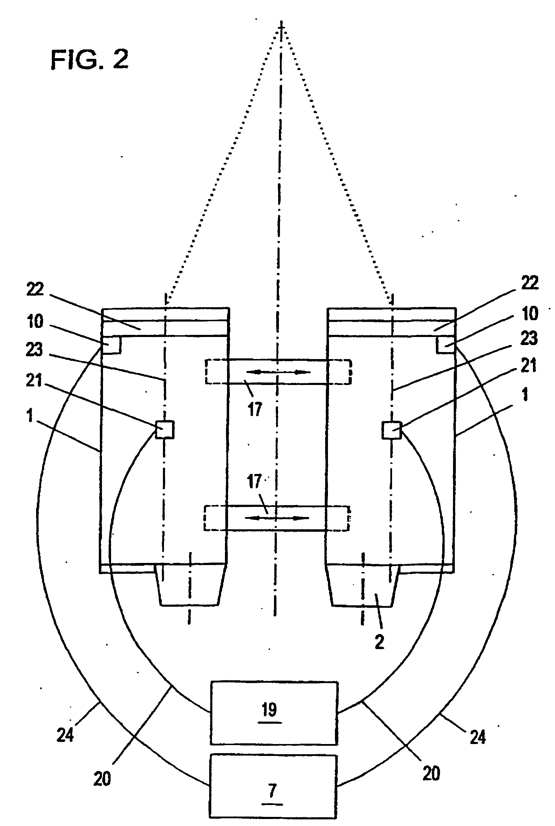

Fig. 2 zeigt schematisch das Einkoppeln von Licht zur koaxialen Beleuchtung des Objektfeldes. Dabei wird von einer externen Lichtquelle 19 über faseroptische Lichtleiter 20 Licht in optische Elemente 21 geführt. Diese Elemente 21 bewirken die koaxiale Ausrichtung des Lichtstrahls 23. Über Stellmotore 10, die kabellos, oder, wie im vorliegenden Anwendungsbeispiel mittels Kabel 24 mit der externen Elektronik 7 zwecks Übermittlung von Stelldaten verbunden sind, wird durch ein Linsensystem 22 die für jeden Arbeitsabstand in Intensität und Größe optimale Ausleuchtung gewährleistet.

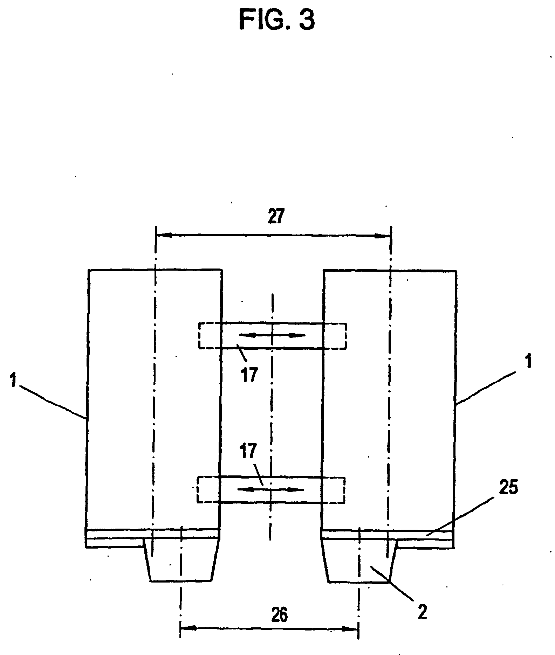

Oft ist, z.B. in der Mikrochirurgie, ein Anpassen des 3-D-Effektes an die jeweilige Anwendung, bzw. an die Oberflächenstruktur des jeweils betrachteten Objektbereiches wünschenswert. Die erfindungsgemäße Sehhilfe löst dieses Problem mit einer Vorrichtung, mit welcher der Abstand zwischen den Objektiven der Sehhilfe bei gleichbleibendem Abstand zwischen den Okularen 2 geändert werden kann. Fig. 3 zeigt schematisch eine Ausführungsform der erfindungsgemäßen Sehhilfe mit einer Vorrichtung 25 zum Verstellen des Abstandes der miteinander durch längenveränderbare Stege 17 verbundenen Tuben 1 voneinander bei gleichbleibendem Abstand 26 der Okulare voneinander und damit des für den Anwender entstehenden 3-D-Effektes. Diese Vorrichtung 25 ist im vorliegenden Ausführungsbeispiel als Bauteil ausgeführt, auf dem die Okulare 2 gegengleich verschoben werden können, um den Abstand 26 zwischen ihnen bei sich ändernden Abstand 27 der Tuben 1, also der Objektive voneinander konstant zu halten, ohne dabei die Abbildung des Objektbereiches zu verlieren. Dieser Effekt kann aber auch durch verschiebbare, optische Bauteile vor den Objektiven oder im Inneren der Tuben 1 erreicht werden.

Um den Vergrößerungsbereich der Sehhilfe zu variieren, können zusätzlich zum optischen System in den Tuben 1 oder alternativ dazu Wechselokulare und/oder Wechselobjektive verwendet werden.

In der medizinischen Diagnostik wird ein Verfahren angewendet, das als photodynamische Diagnose bezeichnet wird. Dabei wird eine photosensible Substanz verwendet, die sich in bestimmten, beispielsweise malignen, Gewebeteilen anreichert und danach durch Bestrahlung mit Licht einer bestimmten Wellenlänge - aus Gründen seiner Eindringtiefe von etwa 5 mm wird normalerweise rotes Laserlicht benutzt - sichtbar gemacht wird. Eine andere Möglichkeit besteht darin unterschiedliche Autofluoreszenzeigenschaften von gesunden und malignen Gewebeteilen unter Licht mit einer bestimmten Wellenlänge auszunützen, um bestehende Karzinome oder präkarzinogene Gewebeteile sichtbar zu machen. Derzeit sind eine Anzahl von Systemen bekannt, die derartige Aufgabenstellungen, meist unter Verwendung eines Endoskopes oder eines Operationsmikroskopes, lösen. Obwohl eine Anwendung dieser Technologie auch, z.B. während offener chirurgischer Interventionen, sehr vorteilhaft wäre, existieren bislang keine kopfgetragenen Sehhilfen, die ihren Einsatz bei dieser Diagnose erlauben würden. Die erfindungsgemäße Sehhilfe kann in einer Ausführungsform so ausgebildet sein, daß in den Strahlengang des optischen Systems Filter eingebracht werden können, die das Wahrnehmen bestimmter, durch Bestrahlen mit Licht bestimmter Wellenlänge entstandene Reflexionseigenschaften des betrachteten Objektbereiches ermöglichen oder erleichtern. Für Fälle, in denen die Reflexionsunterschiede des betrachteten Objektfeldes, z.B. Autofluoreszenz von Gewebestellen, rein visuell nicht erkennbar sind, kann ein Ausführungsbeispiel der Sehhilfe mit einem internen und/oder externen Rezeptor, etwa einem Kamerachip, ausgestattet sein, der das von einer Lichtquelle direkt oder über ein externes oder internes, koaxiales Lichtleitsystem auf das betrachtete Objekt geführte und von diesem reflektierte Licht aufnimmt, über interne oder externe Softwareanwendungen analysiert und dabei gesunden und verdächtigen Gewebeteilen unterschiedliche Farben zuweist. Diese Farben können dann wieder entweder in einen Tubus 1 oder in beide Tuben 1 des optischen Systems eingespiegelt und dort vom Anwender betrachtet werden. Die Farben können auch über externe Displays oder Monitore, gegebenenfalls unter Einspiegelung einer Strichmarke, die Position und Größe des Lichtstrahls auf dem Objekt anzeigt, wiedergegeben werden. Dies kann z.B. bei einer offenen, chirurgischen Tumorentfernung zu Verbesserungen der Radikalität des Entfernens bzw. des Früherkennens von Karzinomen führen.

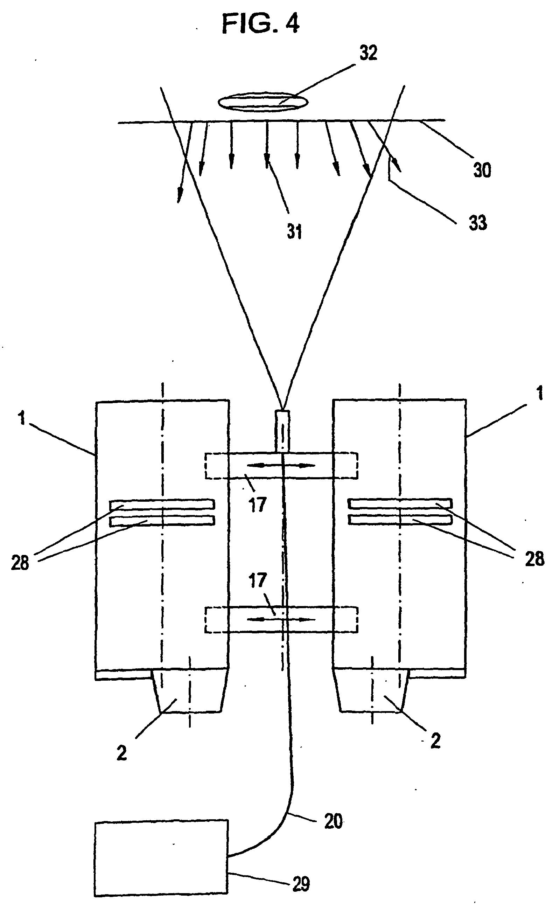

Fig. 4 zeigt schematisch eine aus den Tuben 1, den Okularen 2, den längenverstellbaren Verbindungsstegen 17 bestehende Sehhilfe, in deren optischen Systemen je zwei Filter 28 angeordnet sind. Die Filter 28 können manuell oder motorisch, z.B. durch seitliches Verschieben auf einer Platine, in ihre Wirkstellung und aus dieser weg verschoben werden.

Weiters ist in Fig. 4 eine Laserlichtquelle 29 mit einem Lichtleiter 20, der im gegenständlichen Ausführungsbeispiel das Objektfeld 30 von einer Position zwischen den beiden Tuben 1 der Sehhilfe aus ausleuchtet und unter die Oberfläche des Objektfeldes 30 eindringt. Das von einem (oberflächlichen) Karzinom 32 reflektierte Licht 31 besitzt andere Eigenschaften als das von gesundem Gewebe reflektierte Licht 33. Diese Unterschiede werden entweder durch Ausspiegelung, Analyse sowie Farbcodierung und Rückeinspiegelung des Bildes, oder, wie im Beispiel in Fig. 4 dargestellt, durch die in ihre Wirkstellung verschobenen Filter 28 sichtbar gemacht.

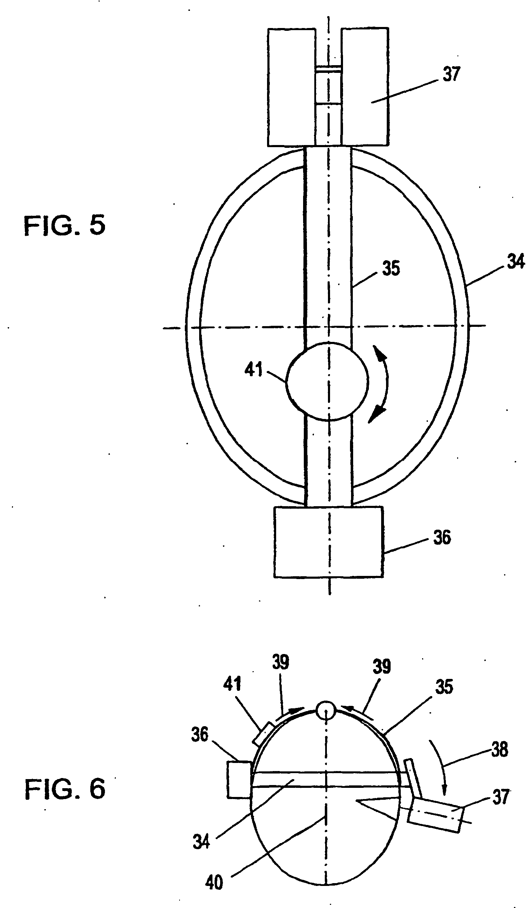

Bei den bekannten, kopfgetragenen Sehhilfen ist bislang das Problem des durch das Gewicht der Sehhilfe und deren notwendigen Abstand von den Augen des Anwenders erzeugten Kippmomentes ungelöst. Die erfindungsgemäße Sehhilfe löst in einer Ausführungsform (Fig. 5 und 6) dieses Problem durch das Anbringen einer über die Längsachse vom Hinter- zum Frontteil der Kopfhalterung 34 verlaufenden, gebogenen Zugstrebe 35 und/oder ein Gewicht 36, das am hinteren Teil der Kopfhalterung 34 angebracht ist. Dadurch wird eine Verlagerung des Schwerpunktes vom sensiblen Stirn- und Nasenbereich des Anwenders weg zum unproblematischen Kopfmittelpunkt und damit auch zur ergonomisch erstrebenswerten Körperlängsachse erreicht.

Fig. 5 zeigt eine Kopfhalterung 34 mit Zugstrebe 35 und Gegengewicht 36.

Fig. 6 zeigt eine schematische Aufrißdarstellung der Kopfhalterung 34. Hier ist zu sehen, wie das durch das Gewicht der Sehhilfe 37 und den Abstand von den Augen des Benutzers ausgelöste Kippmoment 38 durch das Gegengewicht 36 mit der in ihrer Länge durch eine Verstelleinrichtung 41 verstellbaren Zugstrebe 35 kompensiert wird. Das Gewicht kann so entlang der Kraftlinien 39 zur Längsachse 40 des Benutzers auf dessen Kopfmitte verlagert werden.

Besonders bei großen Vergrößerungen trat bei kopfgetragenen Sehhilfen bisher das Problem des "Zittern" und "Verwackeln" auf. Die erfindungsgemäße Sehhilfe löst dieses Problem in einer bevorzugten Ausführungsform durch eine aktive und/oder passive Vibrationsdämpfung.

Es kann vorkommen, daß ein Anwender der Sehhilfe beim Betrachten eines Objektes nicht den durch den mittenbetonten Autofokus erfaßten Bereich, sondern einen anderen, z.B. am Bildrand gelegenen. Bereich scharf sehen möchte. Die erfindungsgemäße Sehhilfe kann deshalb mit einer Vorrichtung zur Detektion der Pupillenlage des Anwenders, gekoppelt mit multiplen Autofokusbereichen sowie einer zugehörigen Steuereinheit, ausgestattet sein.

Es gibt Umstände, unter denen es für einen Anwender einer kopfgetragenen Sehhilfe wünschenswert wäre, Funktionen der Sehhilfe und/oder externer Geräte steuern zu können, ohne daß er einen Schalter berühren muß. Eine an sich hiefür anwendbare Sprachsteuerung ist nicht unter allen Bedingungen einsetzbar. Aus diesem Grund können in den relevanten Bereichen der Kopfhalterung der erfindungsgemäßen Sehhilfe Elektroden angebracht werden, die Hirnströme des Anwenders abnehmen und zur Steuerung der beschriebenen Funktionen der Sehhilfe und/oder zur Rekonstruktion der vom Anwender wahrgenommenen Bilder benutzen.

Weiters können in relevanten Bereichen der Kopfhalterung Biofeedback-Sensoren angebracht sein, welche die Befindlichkeit des Anwenders feststellen können. Die daraus gewonnenen Informationen können dann in verschiedenster Weise, etwa um einen Chirurgen bei übergroßem Streß oder Erschöpfung und Müdigkeit zu warnen, verwendet werden.

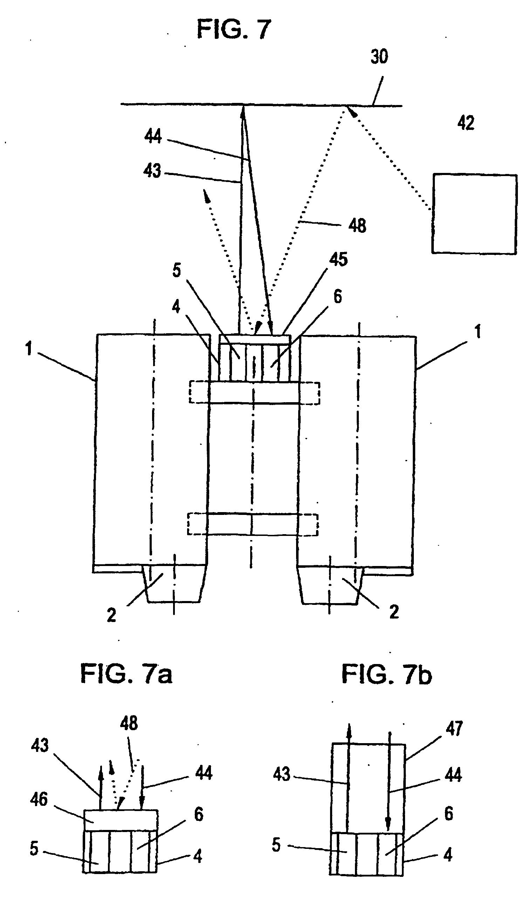

Bei der in Fig. 7, Fig. 7a und Fig. 7b gezeigten Ausführungsform ist bei der als Infrarot(IR-)-System ausgeführten Autofokuseinrichtung 4 an der Empfangseinheit 6 derselben eine Vorrichtung vorgesehen, die verhindert, daß nicht vom Objektfeld 30 reflektierte und nicht von der Autofokuseinrichtung 4 stammende oder zu dieser gehörende Infrarotstrahlung 43, 44 in die Autofokus-Empfangseinheit 6 gelangen kann. Solche nicht zur Autofokuseinrichtung 4 gehörende, reflektierte Infrarotstrahlen 48 können von passiven Infrarot-Bildführungs- oder Navigationssystemen 42 stammen.

Durch die beispielsweise als Filter, insbesondere Polarisationsfilter 45 (Fig. 7), als zum Objektfeld gerichteter Tubus 47 (Fig. 7b) oder als gerade oder schräg gerichteter Lamellen- oder Gittervorsatz 46 (Fig. 7a) ausgebildete Vorrichtung vermeidet also eine unerwünschte Beeinflussung des Autofokussystems 4.

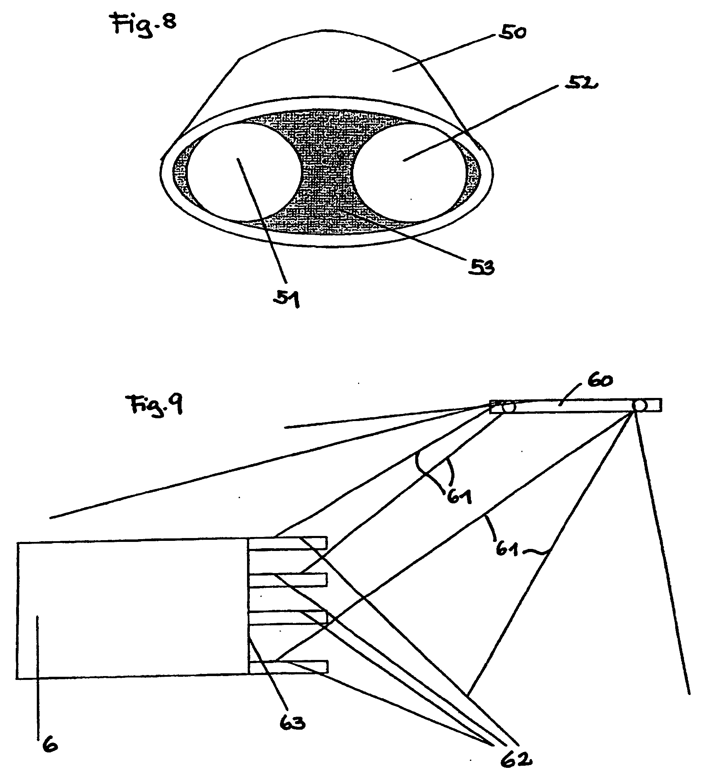

Bei der in Fig. 8 gezeigten Ausführungsform der erfindungsgemäßen Sehhilfe sind beide Linsensysteme 51, 52 , also das rechte und das linke Linsensystem, in einem gemeinsamen Tubus 50 (Mono-Tubus) untergebracht. Die Linsensysteme 51, 52, die in dem gemeinsamen Tubus 50 untergebracht sind, werden beispielsweise durch Abdeckungen 53 an einem oder an beiden Enden des Tubus 50 vor dem Eindringen von Verunreinigungen und vor Fremd- und Streulichteinfall geschützt. So ist ein durch Fremd- oder Streulichteinfall nicht beeinträchtigtes Arbeiten mit der erfindungsgemäßen Sehhilfe möglich.

Ein gemeinsamer Tubus 50, wie er in der Ausführungsform von Fig. 8 beispielhaft gezeigt ist, bietet den Vorteil, daß die Sehhilfe ohne außen liegende und bewegte Teile auskommt. Dies hat u.a. den Vorteil einer besseren Stabilität, einer Unempfindlichkeit der Sehhilfe gegen Stoß, Zug und Verwindungen. Außerdem kann die Sehhilfe in der Ausführungsform von Fig. 8 gegen Eindringen von Feuchtigkeit abgedichtet ausgebildet sein, so daß sich ein Schutz vor eindringendem Spritzwasser ergibt und die Möglichkeit eröffnet wird, die erfindungsgemäße Sehhilfe in eine Desinfektionslösung einzulegen. Schließlich besteht keine Gefahr, daß aus der erfindungsgemäßen Sehhilfe Teile auf ein Operationsfeld fallen können.

Wie bei den anderen Ausführungsformen der erfindungsgemäßen Sehhilfe erfolgt der Ausgleich des Parallaxwinkels bei Änderung der Brennweite durch optische Elemente 11 innerhalb des gemeinsamen Tubus 50, wie dies im Zusammenhang mit den anderen Ausführungsformen (insbesondere Fig. 1) beschrieben worden ist.

Insbesondere bei Operationen, beispielsweise Operationen am menschlichen Gehirn, bei denen der Chirurg nicht unmittelbar, sondern nur über Hilfsmittel das Operationsfeld betrachten kann, werden infrarotgesteuerte Vorrichtungen verwendet, um die Lage von Instrumenten relativ zum Patienten zu verfolgen und an einem Monitor aufzuzeigen. Solche Vorrichtungen (Infrarot-Tracking-Binrichtungen) haben sich außerordentlich bewährt. Wenn eine erfindungsgemäße Sehhilfe gleichzeitig mit einer solchen Infrarot-Tracking-Einrichtung verwendet wird, besteht die Gefahr, daß von der Infrarot-Tracking-Einrichtung ausgesandtes Infrarotlicht die ebenfalls infrarotgesteuerte Autofokuseinrichtung der Sehhilfe beeinträchtigt. Um hier Abhilfe zu schaffen, können bei der erfindungsgemäßen Sehhilfe der Autofokuseinrichtung Teile zugeordnet werden, die den Einfall von Fremdlicht oder Streulicht, insbesondere Licht von Infrarot-Tracking-Einrichtungen 60 zu vermeiden. Dies ist im Prinzip weiter oben an Hand der Fig. 7, 7a und 7b erläutert worden. Auch bei Verwendung der erfindungsgemäßen Sehhilfe im Bereich der Industrie kann auch der Infrarotanteil von Tageslicht störend sein. Um die Autofokuseinrichtung 4 der erfindungsgemäßen Sehhilfe durch störendes Infrarotlicht nicht zu beeinträchtigen, sind in einer Ausführungsform der Erfindung gemäß Sehhilfe Maßnahmen getroffen, die den Einfall von störendem Infrarotlicht, das beispielsweise von Infrarot-Tracking-Einrichtungen 6 und/oder durch Tageslicht stammen kann, verhindern.

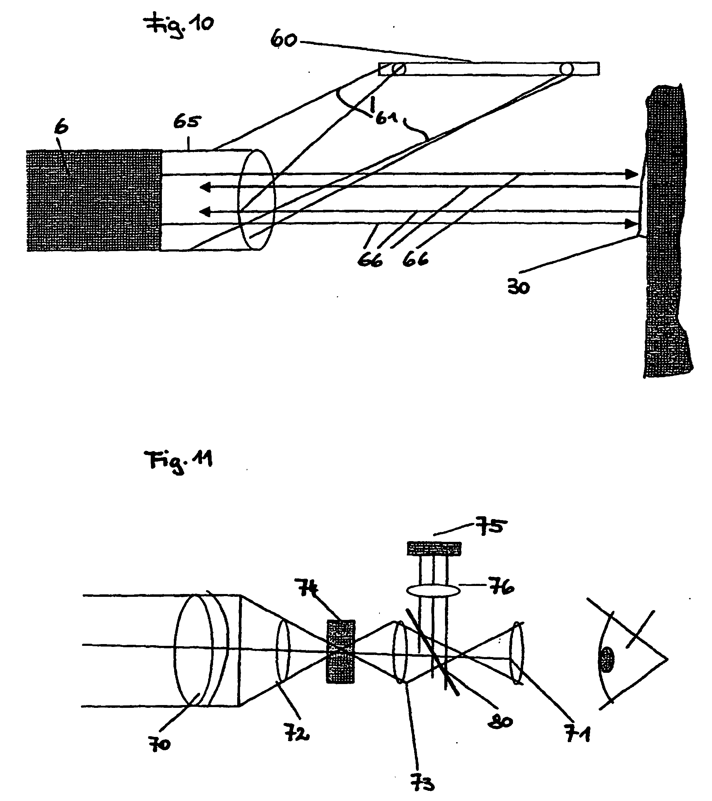

Eine Ausführungsform einer solchen Einrichtung ist in Fig. 9 gezeigt. Diese besteht aus mehreren zueinander parallel ausgerichteten Lamellen, die über die Eintrittsöffnung 63 des Infrarotempfängers der Autofokuseinrichtung 4 vorstehen, so daß der Infrarotempfängers 6 der Autofokuseinrichtung 4 der erfindungsgemäßen Sehhilfe schräg einfallendes Infrarotlicht 61 nicht empfangen kann, da dieses durch die vor dem Empfänger 6 angeordneten Lamellen 62 am Zutritt zum Empfänger 6 gehindert wird. Ausschließlich parallel zur Blickrichtung des Infrarotempfängers 6 ausgerichtete Infrarotstrahlen können auf den Empfänger 6 treffen.

Um zu verhindern, daß beispielsweise bei Einsatz von Infrarottrakkern in chirurgischen Navigationssystemen verwendetes Infrarotstreulicht, das an sich zur Positionsbestimmung von chirurgischen Instrumenten bestimmt ist, in die Empfangseinheit 6 der Autofokuseinrichtung 4 der erfindungsgemäßen Sehhilfe zu verhindern und somit durch Infrarotstreulicht verursachte Störungen des Fokussiervorganges zu vermeiden, kann auch die in Fig. 10 gezeigte Ausführungsform verwendet werden. Bei dieser Ausführungsform ist vor dem Empfänger 6 der Autofokuseinrichtung eine rohrförmige Blende 65 ähnlich einer Sonnenblende, die vor Objektiven eines Fotoapparates verwendet wird, angeordnet. Fig. 10 zeigt, daß Infrarotlicht 61, das von der Infrarot-Trackingeinrichtung 60 stammt, den Empfänger 6 der Autofokuseinrichtung 4 nicht erreichen kann. Lediglich von der zur Autofokuseinrichtung 4 der erfindungsgemäßen Sehhilfe gehörenden Infraroteinrichtung 5 ausgesendetes und von der Objektebene 30 (Objektfeld) reflektiertes Infrarotlicht 66 kann zu dem Empfänger 6 gelangen. Vom Infrarot-Tracker 60, der üblicherweise überkopfhoch angebracht ist, ausgehendes Infrarotlicht 61 können in die Eintrittsöffnung 63 der Infrarot-Empfangseinheit 6 der Autofokuseinrichtung der erfindungsgemäßen Sehhilfe nicht eintreten. Der zum Objektfeld hin gerichtete Tubus 65 vor dem Empfangsteil 6 der Autofokuseinrichtung 4 kann zur Verstärkung des Effektes innenseitig mit lichtabsorbierendem Werkstoff beschichtet oder aus solchem Werkstoff ausgeführt sein.

Alternativ zu den in den Fig. 9 und 10 gezeigten Ausführungsformen besteht auch die Möglichkeit, den Fremdlichteinfall (Einfall von Infrarotstrahlung) durch verschiedene (Polarisations-)Filter zu verhindern.

Um Daten und andere Informationen in das Sehfeld der erfindungsgemäßen Sehhilfe einzuspiegeln, sind verschiedene Möglichkeiten eröffnet. Nachteile von bekannten Möglichkeiten, Daten und anderen Informationen in das Sehfeld der erfindungsgemäßen Sehhilfe einzuspiegeln, haben den Nachteil, daß die eingespiegelten Daten oder andere Informationen (Computertomographie und Magnetresonanz-Bilder) nicht hell und kontrastreich genug dargestellt werden können, um den Anwender der erfindungsgemäßen Sehhilfe ein ermüdungsfreies Arbeiten zu ermöglichen.

In Fig. 11 ist eine Ausführungsform einer erfindungsgemäßen Sehhilfe schematisch gezeigt, mit der Daten und andere Informationen problemlos in das Sehfeld der erfindungsgemäßen Sehhilfe eingespiegelt werden können. Bei der in Fig. 11 gezeigten Ausführungsform ist im Strahlengang zwischen Objektiv 70 und Okular 71 der erfindungsgemäßen Sehhilfe, vorzugsweise zwischen dem Telekompressor 72 und dem Telekonverter 73, ein transparentes Display 74 angeordnet. Dieses transparente Display 74 zeigt ein invertiertes Bild des Hauptdisplay 75, soferne zwischen dem Telekonverter und dem Okular nicht ein Strahlenteiler 80 ("beam splitter") vorgesehen ist. Als Strahlenteiler 80 ist im vorliegenden Zusammenhang eine optische Einrichtung zu verstehen, die Lichtstrahlen teils reflektiert, also beispielsweise um 90° umlenkt, und teils für Lichtstrahlen durchlässig ist. Ein solcher Strahlenteiler 80 kann ein Porroprisma oder ein teilweise durchlässiger Spiegel sein. Dadurch wird erreicht, daß an der Stelle, an der Daten und andere Informationen in das Sehfeld der erfindungsgemäßen Sehhilfe eingeblendet werden, das von der Sehhilfe erzeugte Bild ausgeblendet wird. Dadurch wird die Grafik (eingeblendete Daten und andere Informationen) heller und kontrastreicher, weil sie das Bild nicht überlagern. Bei der in Fig. 11 gezeigten Ausführungsform übernimmt das Hauptdisplay 75 Informationen von externen Quellen, z.B. Magnetresonanz-Bildgeräten oder Computertomographie-Geräten, digitalen Röntgengeräten usw. und spiegelt sie über eine Projetionsoptik und den Strahlenteiler 80 in den Strahlengang der erfindungsgemäßen Sehhilfe ein.

Wesentlich bei der in Fig. 11 gezeigten Ausführungsform ist also, daß das Objektbild dort, wo die Informationen des Hauptdisplay 75 abgebildet werden, abgedunkelt oder geschwächt wird, so daß die Daten und anderen Informationen auf dem Hauptdisplay 75 besser sichtbar sind.

Zusammenfassend kann ein bevorzugtes Ausführungsbeispiel der Erfindung wie folgt beschrieben werden:

Eine Sehhilfe in Form einer Lupenbrille besitzt zwei, je wenigstens ein Objektiv 70 und ein Okular 71 umfassende Linsensysteme. Den Linsensystemen ist eine Autofokussiereinrichtung zugeordnet, welche die Brennweite der Linsensysteme zum Scharfstellen derselben entsprechend dem Abstand der Lupenbrille vom Objekt ändert. Den Linsensystemen ist weiters eine Einrichtung zum Ändern des Vergrößerungsfaktors durch Ändern der Brennweite der Linsensysteme ("Zoom") und schließlich eine Einrichtung zum Anpassen der Parallaxe zwischen den Linsensystemen der Sehhilfe an die jeweils entsprechend dem Abstand der Lupenbrille vom Objekt eingestellte Brennweite zugeordnet. Das Anpassen der Parallaxe erfolgt mit Hilfe von im Strahlengang der Linsensysteme vorgesehenen, verstellbaren optischen Elemente 11 mit denen der Winkel 13 zwischen den aus den Linsensystemen 1 zum Objekt hin verlaufenden Strahlengängen 14 verändert werden kann.

## Patentansprüche

1. Sehhilfe in Form einer Lupenbrille mit zwei Linsensystemen (1), die je wenigstens ein Objektiv (70) und ein Okular (71) umfassen, mit einer Autofokussiereinrichtung (4), welche die Brennweite zum Scharfstellen der Linsensysteme (1) entsprechend dem Abstand der Lupenbrille vom Objekt ändert, mit einer Einrichtung (15) zum Ändern des Vergrößerungsfaktors der Linsensysteme (1) ("Zoom"), mit einer Einrichtung zum Anpassen der Parallaxe zwischen den Linsensystemen (1) der Sehhilfe an die jeweils entsprechend dem Abstand der Lupenbrille vom Objekt eingestellte Brennweite, und mit in den Strahlengängen (14) der Sehhilfe angeordneten, verstellbaren, optischen Elementen (11), **dadurch gekennzeichnet, daß** die in den Strahlengängen (14) der Sehhilfe vorgesehenen, optischen Elemente (11) zum Ändern des Winkels (13) zwischen den aus den Linsensystemen (1) zum Objekt hin verlaufenden Strahlengängen (14) längs gekrümmter Bahnen quer zum Strahlengang in den Linsensystemen verschiebbar sind oder kippbar angeordnet sind.

2. Sehhilfe nach Anspruch 1, **dadurch gekennzeichnet, daß** die optischen Elemente (11) Linsen oder Linsengruppen sind.

3. Sehhilfe nach Anspruch 1 oder 2, **dadurch gekennzeichnet, daß** die optischen Elemente (11) Prismen oder Prismengruppen sind.

4. Sehhilfe nach einem der Ansprüche 1 bis 3, **dadurch gekennzeichnet, daß** die Linsensysteme (51,53) in jeweils einem Tubus (1) angeordnet sind.

5. Sehhilfe nach einem der Ansprüche 1 bis 3, **dadurch gekennzeichnet, daß** die Linsensysteme (51,53) in einem gemeinsamen Tubus (50) angeordnet sind.

6. Sehhilfe nach Anspruch 5, **dadurch gekennzeichnet, daß** die Linsensysteme (51,53) durch eine dem Objektiv (70) und/oder eine dem Okular (71) benachbart angeordnete Abdeckung (53) abgedeckt sind.

7. Sehhilfe nach einem der Ansprüche 1 bis 6, **dadurch gekennzeichnet, daß** die optischen Elemente (11) innerhalb des Tubus (50) oder innerhalb der Tuben (1) angeordnet sind.

8. Sehhilfe nach einem der Ansprüche 1 bis 7, **dadurch gekennzeichnet, daß** die optischen Elemente (11) der Objektivebene vorgeordnet sind.

9. Sehhilfe nach einem der Ansprüche 1 bis 8, **dadurch gekennzeichnet, daß** in eine wenigstens in einem der Linsensysteme angeordnete optische Ebene (16) Informationen in Bild- und/oder Textform einblendbar sind.

10. Sehhilfe nach einem der Ansprüche 1 bis 9, **dadurch gekennzeichnet, daß** neben wenigstens einem der beiden Okulare (2) Displays (18) zum Anzeigen von Informationen in Bild- und/oder Textform angeordnet sind.

11. Sehhilfe nach einem der Ansprüche 1 bis 10, **dadurch gekennzeichnet, daß** mit der Sehhilfe eine Anzeigeeinrichtung (18), z.B. ein Display, verbunden ist, auf die von der Sehhilfe erfaßte Bilder übertragbar sind.

12. Sehhilfe nach Anspruch 11, **dadurch gekennzeichnet, daß** die Anzeigeeinrichtung (18) außerhalb der Sehhilfe angeordnet ist.

13. Sehhilfe nach Anspruch 10 oder 11, **dadurch gekennzeichnet, daß** die von der Sehhilfe erfaßten Bilder durch ein optisches Element, z.B. einen Strahlteiler, oder durch Ausspiegelung aus wenigstens einem der beiden Strahlengänge der Sehhilfe auf die Anzeigeeinrichtung (18) übertragbar ist.

14. Sehhilfe nach einem der Ansprüche 1 bis 13, **dadurch gekennzeichnet, daß** Informationen enthaltende Bild- oder Texteinblendungen in beide Strahlengängen der Tuben (1) stereoskopisch einblendbar sind.

15. Sehhilfe nach einem der Ansprüche 1 bis 14, **dadurch gekennzeichnet, daß** die Bilder oder Textteile als durch Augenabstand und Parallaxe korrigierte Einzelbilder einblendbar sind.

16. Sehhilfe nach einem der Ansprüche 1 bis 15, **dadurch gekennzeichnet, daß** eingeblendete Informationen durch Verändern des Blickwinkels der Sehhilfe zu dem betrachteten Objekt auswählbar sind.

17. Sehhilfe nach einem der Ansprüche 1 bis 16, **dadurch gekennzeichnet, daß** der Sehhilfe Meßgeräte und/oder Sensoren, wie optische oder elektromagnetische Positionsbestimmungssysteme oder Inertialsensoren, wie Akzellerometer oder Winkelgeschwindigkeits-Sensoren zugeordnet sind.

18. Sehhilfe nach einem der Ansprüche 10 bis 17, **dadurch gekennzeichnet, daß** als Informationen anatomische funktionelle und technische Informationen, wie Bilddaten, EKG, positionsgetreu einblendbar sind.

19. Sehhilfe nach einem der Ansprüche 10 bis 18, **dadurch gekennzeichnet, daß** Daten über die interaktive Bestimmung der Lage medizinischer Geräte und/oder Instrumente relativ zum Patienten einblendbar sind.

20. Sehhilfe nach einem der Ansprüche 1 bis 19, **dadurch gekennzeichnet, daß** Bilder, die in den Strahlengang wenigstens eines Linsensystems oder in neben den Okularen (2,71) angebrachten Displays (18) eingeblendet sind, als Ganz- oder Teilbilder darstell- und fixierbar sind.

21. Sehhilfe nach einem der Ansprüche 1 bis 20, **dadurch gekennzeichnet, daß** in eine Zwischenbildebene (16) des Objektivs eine Meßskala eingespiegelt ist.

22. Sehhilfe nach Anspruch 21, **dadurch gekennzeichnet, daß** die Meßskala der jeweils eingestellten Brennweite und Vergrößerung des Objektivs entsprechend ausgewählt ist.

23. Sehhilfe nach einem der Ansprüche 1 bis 22, **dadurch gekennzeichnet, daß** das Verändern der Brennweite und/oder des Vergrößerungsfaktors durch eine sprachabhängige Steuerung steuerbar ist.

24. Sehhilfe nach einem der Ansprüche 1 bis 23, **dadurch gekennzeichnet, daß** an der Sehhilfe eine Lichtquelle angeordnet ist, deren Aperturwinkel an die jeweilige Vergrößerung der Sehhilfe anpaßbar ist, derart, daß die Größe des beleuchteten Feldes dem Gesichtsfeld der Sehhilfe entspricht.

25. Sehhilfe nach Anspruch 24, **dadurch gekennzeichnet, daß** die Lichtquelle eine über ein Lichtleitfaserbündel (20) aus einer externen Lichtquelle (29) gespeiste Lichtquelle ist.

26. Sehhilfe nach Anspruch 24 oder 25, **dadurch gekennzeichnet, daß** der Aperturwinkel der Lichtquelle sowie die Intensität des austretenden Lichtes durch ein in den Tuben oder an der Lichtquelle angeordnetes Linsensystem und/oder einen Verschluß veränderbar ist.

27. Sehhilfe nach einem der Ansprüche 1 bis 26, **dadurch gekennzeichnet, daß** Licht aus einer Lichtquelle (19) durch einen Strahlteiler (21) oder eine Prismenfläche eines Prismenumkehrsystems (21) einkoppelbar ist und durch das optische System der Sehhilfe zum Objekt hin austritt.

28. Sehhilfe nach einem der Ansprüche 1 bis 27, **dadurch gekennzeichnet, daß** der Abstand der Objektive (70) der Linsensysteme voneinander bei konstantem Abstand der Okulare (2) voneinander veränderbar ist.

29. Sehhilfe nach Anspruch 26, **dadurch gekennzeichnet, daß** der Abstand der Objektive (70) voneinander durch eine längenverstellbare Verbindung (17) zwischen den die Linsensysteme aufnehmenden Tuben (1) bei konstanter Verbindung (17) zwischen den Okularen (2) der Linsensysteme vorgesehen ist.

30. Sehhilfe nach Anspruch 29, **dadurch gekennzeichnet, daß** der Abstand der Objektive (70) voneinander durch Parallelverstellen der Tuben (1) veränderbar ist, und daß die Okulare (2) an den Tuben (1) gegengleich verstellbar sind.

31. Sehhilfe nach einem der Ansprüche 1 bis 30, **dadurch gekennzeichnet, daß** die Okulare (2) als Wechselokulare und/oder die Objektive (70) als Wechselobjektive ausgebildet sind.

32. Sehhilfe nach einem der Ansprüche 1 bis 31, **dadurch gekennzeichnet, daß** in der Sehhilfe wenigstens eine Einrichtung zum Erfassen der Lage der Pupille des Anwenders vorgesehen ist, die mit der Autofokuseinrichtung gekuppelt ist, und daß der Abstand (A) zwischen Sehhilfe und Objekt zum Betätigen der Autofokuseinrichtung in dem durch die Lage der Pupille vorgegebenen Blickwinkel erfaßt wird.

33. Sehhilfe nach einem der Ansprüche 1 bis 32, **dadurch gekennzeichnet, daß** in wenigstens einem der beiden Linsensysteme Filter (28) vorgesehen sind.

34. Sehhilfe nach Anspruch 33, **dadurch gekennzeichnet, daß** die Filter (28) in ihre Wirklage und aus ihrer Wirklage heraus verstellbar sind.

35. Sehhilfe nach einem der Ansprüche 1 bis 34, **dadurch gekennzeichnet, daß** in wenigstens einem Linsensystem ein von einer Lasereinrichtung ausgehender Laserstrahl, gegebenenfalls in den Strahlengang des Linsensystems eingekoppelt, auf das Objekt (30) gerichtet ist.

36. Sehhilfe nach Anspruch 35, **dadurch gekennzeichnet, daß** die Einkopplung des Laserstrahls in einer Zwischenbildebene mit einer Strichmarke ausgestattet ist, so daß der Durchmesser und die Position des Laserstrahls im Objektfeld anzeigbar sind.

37. Sehhilfe nach einem der Ansprüche 1 bis 36, **dadurch gekennzeichnet, daß** die Sehhilfe an einer Kopfhalterung (34) angebracht ist.

38. Sehhilfe nach Anspruch 37, **dadurch gekennzeichnet, daß** an der Kopfhalterung (34) eine von der Stirn zum Hinterkopf verlaufende längenveränderliche Zugstrebe (35) vorgesehen ist.

39. Sehhilfe nach Anspruch 37 oder 38, **dadurch gekennzeichnet, daß** an der Kopfhalterung (34), gegebenenfalls verstellbar, wenigstens ein das Gewicht der Sehhilfe ganz oder teilweise ausgleichendes Gegengewicht (36) angeordnet ist.

40. Sehhilfe nach einem der Ansprüche 1 bis 39, **dadurch gekennzeichnet, daß** den Strahlengängen durch die Linsensysteme eine Sichtlinienstabilisierung zugeordnet ist.

41. Sehhilfe nach Anspruch 40, **dadurch gekennzeichnet, daß** die Sichtlinienstabilisierung als aktive oder passive Vibrationsdämpfung ausgebildet ist.

42. Sehhilfe nach einem der Ansprüche 37 bis 41, **dadurch gekennzeichnet, daß** an der Kopfhalterung (34) für die Sehhilfe Elektroden angeordnet sind, welche Gehirnströme erfassen und daß die Elektroden mit einer Steuerung gekuppelt sind, mit der Funktionen der Sehhilfe steuerbar sind.

43. Sehhilfe nach Anspruch 42, **dadurch gekennzeichnet, daß** die Steuerung mit externen Geräten, z.B. Robotern, gekuppelt sind.

44. Sehhilfe nach Anspruch 43, **dadurch gekennzeichnet, daß** die Kupplung über Drahtfunk oder Infrarot erfolgt.

45. Sehhilfe nach einem der Ansprüche 1 bis 44, **dadurch gekennzeichnet, daß** an der Kopfhalterung (34) Biosensoren, EEG-Sensoren und/oder Sensoren zur Hautwiderstandsmessung zum Erfassen der Vitaldaten eines Verwenders der Sehhilfe angeordnet sind.

46. Sehhilfe nach einem der Ansprüche 1 bis 45, **dadurch gekennzeichnet, daß** an den Okularen (2) der Sehhilfe Halterungen für optische Sehbehelfe, z.B. Brillengläser, angeordnet sind.

47. Sehhilfe nach Anspruch 46, **dadurch gekennzeichnet, daß** die von der Halterung gehaltenen Sehbehelfe neben den Okularen angeordnet sind.

48. Sehhilfe nach einem der Ansprüche 1 bis 44, **dadurch gekennzeichnet, daß** die Linsensysteme beider Strahlengänge in einem gemeinsamen Tubus untergebracht sind.

49. Sehhilfe nach einem der Ansprüche 1 bis 48, **dadurch gekennzeichnet, daß** an der Empfangseinheit (6) der Autofokuseinrichtung (4) eine Vorrichtung (45, 46, 47) vorgesehen ist, die ausschließlich für vom Objektfeld (30) reflektierte Infrarotsignale (44) durchlässig ist.

50. Sehhilfe nach Anspruch 49, **dadurch gekennzeichnet, daß** die Vorrichtung ein Filter (45) ist.

51. Sehhilfe nach Anspruch 50, **dadurch gekennzeichnet, daß** das Filter ein Polarisationsfilter (45) ist.

52. Sehhilfe nach Anspruch 49, **dadurch gekennzeichnet, daß** die Vorrichtung ein am Empfangsteil (6) der Autofokuseinrichtung (4) angeordneter, zum Objektfeld (30) hin gerichteter Tubus (47,65) ist.

53. Sehhilfe nach Anspruch 49, **dadurch gekennzeichnet, daß** die Vorrichtung ein am Empfangsteil (6) der Autofokuseinrichtung (4) angeordneter Lamellen- (63) oder Gittervorsatz (46) ist.

54. Sehhilfe nach Anspruch 53, **dadurch gekennzeichnet, daß** der Lamellen- (63) oder Gittervorsatz (46) ein gerade gerichteter Lamellen- (63) oder Gittervorsatz (46) ist.

55. Sehhilfe nach Anspruch 53, **dadurch gekennzeichnet, daß** der Lamellen- oder Gittervorsatz ein schräg gerichteter Lamellen- oder Gittervorsatz ist.

56. Sehhilfe nach einem der Ansprüche 1 bis 55, **dadurch gekennzeichnet, daß** im Strahlengang wenigstens eines Linsensystem (51,53) ein transparentes Display (74) angeordnet ist, und daß aus einem Hauptdisplay (75) über einen Strahlenleiter (80) virtuelle Anzeigen in den Strahlengang des Linsensystems eingespiegelt sind.

57. Sehhilfe nach Anspruch 56, **dadurch gekennzeichnet, daß** der Strahlenleiter (80) ein Prisma, insbesondere ein Porroprisma, oder ein halbdurchlässiger Spiegel ist.

## Claims

1. Visual aid in the form of a magnifying loupe with two lens systems (1), each comprising at least one lens (70) and an eyepiece (71), with an autofocus (4), which varies the focal length to focus the lens systems (1) in accordance with the distance of the magnifying loupe from the object, with a unit (15) for varying the magnification factor of the lens systems (1) ("zoom"), with a unit for adapting the parallax between the lens systems (1) of the visual aid to the focal length set respectively in accordance with the distance of the magnifying loupe from the object, and with adjustable optical elements (11) disposed in the optical paths (14) of the visual aid, **characterised in that** for varying the angle (13) between the optical paths (14) running from the lens systems (1) towards the object, the optical elements (11) provided in the optical paths (14) of the visual aid are displaceable along curved paths transversely to the optical path in the lens systems or are disposed to tilt.

2. Visual aid according to Claim 1, **characterised in that** the optical elements (11) are lenses or lens clusters.

3. Visual aid according to Claim 1 or 2, **characterised in that** the optical elements (11) are prisms or groups of prisms.

4. Visual aid according to one of Claims 1 to 3, **characterised in that** the lens systems (51, 53) are disposed in a respective tube (1).

5. Visual aid according to one of Claims 1 to 3, **characterised in that** the lens systems (51, 53) are disposed in a joint tube (50).

6. Visual aid according to Claim 5, **characterised in that** the lens systems (51, 53) are covered by a covering (53) arranged adjacent to the lens (70) and/or adjacent to the eyepiece (71).

7. Visual aid according to one of Claims 1 to 6, **characterised in that** the optical elements (11) are disposed inside the tube (50) or inside the tubes (1).

8. Visual aid according to one of Claims 1 to 7, **characterised in that** the optical elements (11) are disposed in front of the lens plane.

9. Visual aid according to one of Claims 1 to 8, **characterised in that** information in image and/or text form may be faded into an optical plane (16) disposed at least in one of the lens systems.

10. Visual aid according to one of the Claims 1 to 9, **characterised in that** displays (18) are disposed adjacent to at least one of the two eyepieces (2) to display information in image and/or text form.

11. Visual aid according to one of Claims 1 to 10, **characterised in that** a display unit (18), e.g. a display, is connected to the visual aid, onto which images captured by the visual aid can be transferred.

12. Visual aid according to Claim 11, **characterised in that** the display unit (18) is disposed outside the visual aid.

13. Visual aid according to Claim 10 or 11, **characterised in that** the images captured by the visual aid may be transferred to the display unit (18) by an optical element, e.g. a beam splitter, or by reflection from at least one of the two optical paths of the visual aid.

14. Visual aid according to one of Claims 1 to 13, **characterised in that** faded-in images or text containing information may be faded stereoscopically into both optical paths of the tubes (1).

15. Visual aid according to one of Claims 1 to 14, **characterised in that** the images or pieces of text may be faded-in as single images corrected by eye distance and parallax.

16. Visual aid according to one of Claims 1 to 15, **characterised in that** faded-in information may be selected by varying the viewing angle of the visual aid to the object viewed.

17. Visual aid according to one of Claims 1 to 16, **characterised in that** the visual aid has associated measuring instruments and/or sensors, such as optical or electromagnetic position-finding systems, or inertial sensors, such as accelerometers or angular velocity sensors.

18. Visual aid according to one of Claims 10 to 17, **characterised in that** anatomical, functional and technical information, such as image data, ECG, can be faded-in as information in a position-specific manner.

19. Visual aid according to one of Claims 10 to 18, **characterised in that** data relating to the interactive determination of the position of medical devices and/or instruments in relation to the patient may be faded-in.

20. Visual aid according to one of Claims 1 to 19, **characterised in that** images, which are faded into the optical path of at least one lens system or into displays (18) attached adjacent to the eyepieces (2, 71), can be displayed and fixed as full or part-images.

21. Visual aid according to one of Claims 1 to 20, **characterised in that** a measurement scale is reflected into an intermediate image plane (16) of the lens.

22. Visual aid according to Claim 21, **characterised in that** the measurement scale is selected in accordance with the respectively set focal length and magnification of the lens.

23. Visual aid according to one of Claims 1 to 22, **characterised in that** the variation of the focal length and/or the magnification factor may be controlled by a speech-dependent control means.

24. Visual aid according to one of Claims 1 to 23, **characterised in that** a light source is disposed on the visual aid, the aperture angle of which may be adapted to the respective magnification of the visual aid such that the size of the illuminated field corresponds to the viewing field of the visual aid.

25. Visual aid according to Claim 24, **characterised in that** the light source is a light source supplied via a light-conducting fibre bundle (20) from an external light source (29).

26. Visual aid according to Claim 24 or 25, **characterised in that** the aperture angle of the light source and also the intensity of the outgoing light may be varied by a lens system disposed in the tubes or on the light source and/or a shutter.

27. Visual aid according to one of Claims 1 to 26, **characterised in that** light from a light source (19) may be coupled in through a beam splitter (21) or a prism face of a prism inversion system (21) and exits through the optical system of the visual aid towards the object.

28. Visual aid according to one of Claims 1 to 27, **characterised in that** the distance of the lenses (70) of the lens systems from one another may be varied with a constant distance of the eyepieces (2) from one another.

29. Visual aid according to Claim 26, **characterised in that** the distance of the lenses (70) from one another is provided by a length-adjustable connection (17) between the tubes (1) housing the lens systems with a constant connection (17) between the eyepieces (2) of the lens systems.

30. Visual aid according to Claim 29, **characterised in that** the distance of the lenses (70) from one another may be varied by parallel displacement of the tubes (1), and that the eyepieces (2) may be displaced on the tubes (1) to be diametrically opposed.

31. Visual aid according to one of Claims 1 to 30, **characterised in that** the eyepieces (2) are configured as interchangeable eyepieces and/or the lenses (70) are configured as interchangeable lenses.

32. Visual aid according to one of Claims 1 to 31, **characterised in that** at least one means for detecting the position of the pupil of the user is provided in the visual aid and is coupled with the autofocus, and that the distance (A) between the visual aid and the object is determined for operation of the autofocus in the viewing angle predetermined by the position of the pupil.

33. Visual aid according to one of Claims 1 to 32, **characterised in that** filters (28) are provided in at least one of the two lens systems.

34. Visual aid according to Claim 33, **characterised in that** the filters (28) may be displaced into their active position and out of their active position.

35. Visual aid according to one of Claims 1 to 34, **characterised in that** in at least one lens system a laser beam exiting from a laser unit, and possibly coupled into the optical path of the lens system, is directed onto the object (30).

36. Visual aid according to Claim 35, the feed of the laser beam is equipped with a reticule marking in an intermediate image plane, so that the diameter and the position of the laser beam may be displayed in the object field.

37. Visual aid according to one of Claims 1 to 36, **characterised in that** the visual aid is attached to a headset (34).

38. Visual aid according to Claim 37, **characterised in that** a length-adjustable cross band (35) running from the forehead to the back of the head is provided.

39. Visual aid according to Claim 37 or 38, **characterised in that** at least one counterweight (36) for completely or partially balancing the weight of the visual aid is disposed, possibly displaceably, on the headset (34).

40. Visual aid according to one of Claims 1 to 39, **characterised in that** a viewing line stabilisation means is assigned to the optical paths through the lens systems.

41. Visual aid according to Claim 40, **characterised in that** the viewing line stabilisation means is configured as an active or passive vibration damping means.

42. Visual aid according to one of Claims 37 to 41, **characterised in that** electrodes, which detect brain waves, are disposed on the headset (34) for the visual aid, and that the electrodes are coupled to a control means, with which functions of the visual aid may be controlled.

43. Visual aid according to Claim 42, **characterised in that** the control means is coupled to external devices, e.g. robots.

44. Visual aid according to Claim 43, **characterised in that** the coupling is achieved via wire communication or infrared.

45. Visual aid according to one of Claims 1 to 44, **characterised in that** biosensors, EEG-sensors and/or sensors for measuring skin resistance to detect the vital data of a user of the visual aid are disposed on the headset (34).

46. Visual data according to one of Claims 1 to 45, **characterised in that** mountings for optical visual aids, e.g. spectacles, are disposed on the eyepieces (2) of the visual aid.

47. Visual aid according to Claim 46, **characterised in that** the visual aid held by the mounting is disposed next to the eyepieces.

48. Visual aid according to one of Claims 1 to 44, **characterised in that** the lens systems of both optical paths are housed in a joint tube.

49. Visual aid according to one of Claims 1 to 48, **characterised in that** a device (45, 46, 47), which is transparent solely to infrared signals (44) reflected by the object field (30), is provided on the receiver unit (6) of the autofocus (4).

50. Visual aid according to Claim 49, **characterised in that** the device is a filter (45).

51. Visual aid according to Claim 50, **characterised in that** the device is a polarising filter (45).

52. Visual aid according to Claim 49, **characterised in that** the device is a tube (47, 65) directed towards the object field (30) and disposed on the receiver part (6) of the autofocus (4).

53. Visual aid according to Claim 49, **characterised in that** the device is a lamellar (63) or grating attachment (46) disposed on the receiver part (6) of the autofocus (4).

54. Visual aid according to Claim 53, **characterised in that** the lamellar (63) or grating attachment (46) is a linearly directed lamellar (63) or grating attachment (46).

55. Visual aid according to Claim 53, **characterised in that** the lamellar or grating attachment is an obliquely directed lamellar or grating attachment.

56. Visual aid according to one of Claims 1 to 55, **characterised in that** a transparent display (74) is disposed in the optical path of at least one lens system (51, 53), and that virtual displays are reflected from a main display (75) via a beam guide means (80) into the optical path of the lens system.

57. Visual aid according to Claim 56, **characterised in that** the beam guide means (80) is a prism, in particular a Porro prism or a semi-transparent mirror.

## Revendications

1. Dispositif optique sous forme de lunette-loupe comprenant deux systèmes de lentille (1) qui comportent chacun au moins un objectif (70) et un oculaire (71); un dispositif autofocus (4) qui modifie la distance focale pour la mise au point des systèmes de lentille (1) en fonction de la distance de la lunette-loupe par rapport à l'objet; un dispositif (15) pour modifier le facteur de grossissement des systèmes de lentille (1) ("zoom"); un dispositif pour adapter la parallaxe entre les systèmes de lentille (1) du dispositif optique à la distance focale réglée en fonction de la distance de la lunette-loupe par rapport à l'objet; et des éléments optiques (11) réglables, placés dans les trajets de rayons (14) du dispositif optique, **caractérisé en ce que** les éléments optiques (11) prévus dans les trajets de rayons (14) du dispositif optique, afin de modifier l'angle (13) entre les trajets de rayons (14) partant des systèmes de lentille (1) vers l'objet, peuvent être déplacés le long de trajectoires courbes dans les systèmes de lentille, perpendiculairement au trajet des rayons, ou sont montés avec possibilité de basculement.

2. Dispositif optique selon la revendication 1, **caractérisé en ce que** les éléments optiques (11) sont des lentilles ou des groupes de lentilles.

3. Dispositif optique selon la revendication 1 ou 2, **caractérisé en ce que** les éléments optiques (11) sont des prismes ou des groupes de prismes.

4. Dispositif optique selon une des revendications 1 à 3, **caractérisé en ce que** les systèmes de lentille (51, 52) sont chacun placés dans un tube (1).

5. Dispositif optique selon une des revendications 1 à 3, **caractérisé en ce que** les systèmes de lentille (51, 52) sont placés dans un tube (50) commun.

6. Dispositif optique selon la revendication 5, **caractérisé en ce que** les systèmes de lentille (51, 52) sont recouverts par un élément de recouvrement (53) disposé dans le voisinage de l'objectif et/ou de l'oculaire (71).

7. Dispositif optique selon une des revendications 1 à 6, **caractérisé en ce que** les éléments optiques (11) sont placés dans le tube (50) ou dans les tubes (1).

8. Dispositif optique selon une des revendications 1 à 7, **caractérisé en ce que** les éléments optiques (11) sont placés devant le plan de l'objectif.

9. Dispositif optique selon une des revendications 1 à 8, **caractérisé en ce que** des informations sous forme d'image et/ou de texte peuvent être insérées dans un plan optique (16) disposé dans au moins un des systèmes de lentille.

10. Dispositif optique selon une des revendications 1 à 9, **caractérisé en ce que** des moyens de visualisation (18), destinés à représenter des informations sous forme d'image et/ou de texte, sont placés à côté d'un au moins es deux oculaires (2).

11. Dispositif optique selon une des revendications 1 à 10, **caractérisé en ce qu'**un moyen de visualisation (18), par exemple un écran, auquel peuvent être transférées des images enregistrées par le dispositif optique, est connecté au dispositif optique.

12. Dispositif optique selon la revendication 11, **caractérisé en ce que** le moyen de visualisation (18) est installé à l'extérieur du dispositif optique.

13. Dispositif optique selon la revendication 10 ou 11, **caractérisé en ce que** les images enregistrées par le dispositif optique peuvent être transmises au moyen de visualisation (18) par un élément optique, par exemple un diviseur de faisceau, ou par séparation par réflexion d'au moins un des deux trajets de rayons du dispositif optique.

14. Dispositif optique selon une des revendications 1 à 13, **caractérisé en ce que** des images ou des textes contenant des informations peuvent être insérés dans les deux trajets de rayons des tubes (1).

15. Dispositif optique selon une des revendications 1 à 14, **caractérisé en ce que** les images ou textes peuvent être insérés en tant qu'images individuelles corrigées par l'écartement des yeux et la parallaxe.

16. Dispositif optique selon une des revendications 1 à 15, **caractérisé en ce que** les informations insérées peuvent être sélectionnées par modification de l'angle de visée du dispositif optique par rapport à l'objet observé.

17. Dispositif optique selon une des revendications 1 à 16, **caractérisé en ce que** des appareils de mesure et/ou des détecteurs, tels que des systèmes optiques ou électromagnétiques de détermination de position, ou des détecteurs à inertie, tels que des accéléromètres ou des détecteurs de vitesse angulaire, sont associés au dispositif optique.

18. Dispositif optique selon une des revendications 10 à 17, **caractérisé en ce que** des informations anatomiques fonctionnelles et techniques, telles que des données d'image ou d'ECG, peuvent être insérées en tant qu'information dans la position exacte.

19. Dispositif optique selon une des revendications 10 à 18, **caractérisé en ce qu'**il est possible d'insérer des données concernant la détermination interactive de la position d'appareils et/ou d'instruments médicaux par rapport au patient.

20. Dispositif optique selon une des revendications 1 à 19, **caractérisé en ce que** les images qui sont insérées dans le trajet de rayons d'au moins un système de lentille ou dans des moyens de visualisation (18) placés à côté des oculaires (2, 71) peuvent être représentées et fixées comme images totales ou partielles.

21. Dispositif optique selon une des revendications 1 à 20, **caractérisé en ce qu'**une graduation de mesure est insérée dans un plan d'image intermédiaire (16) de l'objectif.

22. Dispositif optique selon la revendication 21, **caractérisé en ce que** la graduation de mesure est choisie en fonction de la distance focale respective réglée et du grossissement de l'objectif.

23. Dispositif optique selon une des revendications 1 à 22, **caractérisé en ce que** la modification de la distance focale et/ou du facteur de grossissement peut être commandée à la voix.

24. Dispositif optique selon une des revendications 1 à 23, **caractérisé en ce qu'**il est prévu sur le dispositif optique une source lumineuse dont l'angle d'ouverture peut être adapté au grossissement respectif du dispositif optique, de manière telle que la taille du champ éclairé corresponde au champ de vision du dispositif optique.

25. Dispositif optique selon la revendication 24, **caractérisé en ce que** la source lumineuse est une source lumineuse alimentée par un faisceau de fibres optiques (20) à partir d'une source lumineuse (29) externe.

26. Dispositif optique selon la revendication 24 ou 25, **caractérisé en ce que** l'angle d'ouverture de la source lumineuse ainsi que l'intensité de la lumière sortante peuvent être modifiés par un système de lentille, disposé dans les tubes ou sur la source lumineuse, et/ou un obturateur.

27. Dispositif optique selon une des revendications 1 à 26, **caractérisé en ce que** la lumière provenant d'une source lumineuse (19) peut être couplée par un diviseur de faisceau (21) ou une surface de prisme d'un système inverseur à prisme (21), traverse le système optique du dispositif optique et sort en direction de l'objet.

28. Dispositif optique selon une des revendications 1 à 27, **caractérisé en ce que** l'espacement des objectifs (70) des systèmes de lentille peut être modifié, tout en maintenant l'espacement des oculaires (2) constant.

29. Dispositif optique selon la revendication 26, **caractérisé en ce que** l'espacement des objectifs (70) est prévu par une liaison (17) réglable en longueur entre les tubes (1) recevant les systèmes de lentille, avec une liaison (17) constante entre les oculaires (2) des systèmes de lentille.

30. Dispositif optique selon la revendication 29, **caractérisé en ce que** l'espacement des objectifs (70) peut être modifié par déplacement parallèle des tubes (1) et **en ce que** les oculaires (2) peuvent être déplacés dans des sens opposés sur les tubes.

31. Dispositif optique selon une des revendications 1 à 30, **caractérisé en ce que** les oculaires (2) sont réalisés sous forme d'oculaires interchangeables et/ou les objectifs (70) sont réalisés sous forme d'objectifs interchangeables.

32. Dispositif optique selon une des revendications 1 à 31, **caractérisé en ce que** le dispositif optique comprend au moins un moyen pour détecter la position de la pupille de l'utilisateur, lequel moyen est couplé au dispositif autofocus, et **en ce que** la distance (A) entre le dispositif optique et l'objet est mesurée pour actionner le dispositif autofocus dans l'angle de visée prédéterminé par la position de la pupille.

33. Dispositif optique selon une des revendications 1 à 32, **caractérisé en ce que** des filtres (28) sont prévus dans au moins un des deux systèmes de lentille.

34. Dispositif optique selon la revendication 33, **caractérisé en ce que** les filtres (28) peuvent être déplacés dans leur position active et hors de celle-ci.

35. Dispositif optique selon une des revendications 1 à 34, **caractérisé en ce que** dans au moins un système de lentille, un faisceau laser partant d'un dispositif laser est dirigé sur l'objet (30), en étant le cas échéant couplé dans le trajet de rayons du système de lentille.

36. Dispositif optique selon la revendication 35, **caractérisé en ce que** le moyen de couplage du faisceau laser est pourvu d'un trait de repère dans un plan d'image intermédiaire, de sorte que le diamètre et la position du faisceau laser peuvent être indiqués dans le champ de l'objet.

37. Dispositif optique selon une des revendications 1 à 36, **caractérisé en ce que** le dispositif optique est monté sur un support (34) fixé à la tête.

38. Dispositif optique selon la revendication 37, **caractérisé en ce que** le support (34) fixé à la tête comprend un étrier (35) réglable en longueur qui s'étend du front jusqu'à l'arrière de la tête.

39. Dispositif optique selon la revendication 37 ou 38, **caractérisé en ce qu'**il est prévu sur le support (34) fixé à la tête, le cas échéant avec possibilité de réglage, au moins un contre-poids (36) qui compense totalement ou en partie le poids du dispositif optique.

40. Dispositif optique selon une des revendications 1 à 39, **caractérisé en ce qu'**un moyen de stabilisation de ligne visuelle est associé aux trajets de rayons passant par les systèmes de lentille.

41. Dispositif optique selon la revendication 40, **caractérisé en ce que** le moyen de stabilisation de ligne visuelle est réalisé sous forme d'amortisseur de vibrations actif ou passif.

42. Dispositif optique selon une des revendications 37 à 41, **caractérisé en ce que** des électrodes sont placées sur le support (34) fixé à la tête pour le dispositif optique, afin de détecter des courants cérébraux, et **en ce que** ces électrodes sont couplées à un système de commande qui permet de contrôler des fonctions du dispositif optique.

43. Dispositif optique selon la revendication 42, **caractérisé en ce que** le système de commande est couplé à des appareils externes, par exemple des robots.

44. Dispositif optique selon la revendication 43, **caractérisé en ce que** le couplage s'effectue par radiodiffusion par câbles ou par infrarouge.

45. Dispositif optique selon une des revendications 1 à 44, **caractérisé en ce que** des biocapteurs, des capteurs EEG et/ou des capteurs destinés à mesurer la résistance de la peau sont disposés sur le support (34) fixé à la tête aux fins d'enregistrer les données vitales de l'utilisateur du dispositif optique.

46. Dispositif optique selon une des revendications 1 à 45, **caractérisé en ce que** des supports pour des moyens optiques de correction de la vue, par exemple des verres de lunettes, sont montés sur les oculaires (2) du dispositif optique.

47. Dispositif optique selon la revendication 46, **caractérisé en ce que** les moyens de correction de la vue montés sur le support sont disposés à côté des oculaires.

48. Dispositif optique selon une des revendications 1 à 44, **caractérisé en ce que** les systèmes de lentille des deux trajets de rayons sont logés dans un tube commun.

49. Dispositif optique selon une des revendications 1 à 48, **caractérisé en ce que** l'unité réceptrice (6) du dispositif autofocus (4) comporte un élément (45, 46, 47) qui laisse passer uniquement des signaux infrarouges (44) réfléchis par le champ de l'objet (30).

50. Dispositif optique selon la revendication 49, **caractérisé en ce que** ledit élément est un filtre (45).

51. Dispositif optique selon la revendication 50, **caractérisé en ce que** le filtre est un filtre de polarisation (45).

52. Dispositif optique selon la revendication 49, **caractérisé en ce que** ledit élément est un tube (47, 65) disposé sur l'unité réceptrice (6) du dispositif autofocus (4) et orienté en direction du champ de l'objet (30).

53. Dispositif optique selon la revendication 49, **caractérisé en ce que** ledit élément est un élément additionnel à lamelles (63) ou à grille (46) monté sur la partie réceptrice (6) du dispositif autofocus (4).

54. Dispositif optique selon la revendication 53, **caractérisé en ce que** l'élément additionnel à lamelles (63) ou à grille (46) est un élément droit.

55. Dispositif optique selon la revendication 53, **caractérisé en ce que** l'élément additionnel à lamelles ou à grille est un élément incliné.

56. Dispositif optique selon une des revendications 1 à 55, **caractérisé en ce qu'**un moyen de visualisation (74) transparent est disposé dans le trajet de rayons d'au moins un système de lentille (51, 52), et **en ce que** des indications virtuelles sont insérées dans le trajet de rayons du système de lentille à partir d'un moyen de visualisation principal (75), via un guide-rayons (90).

57. Dispositif optique selon la revendication 56, **caractérisé en ce que** le guide-rayons (80) est un prisme, en particulier un prisme de Porro, ou un miroir semi-transparent.
